(19) Europäisches Patentamt
European Patent Office
Office européen des brevets

(11) Veröffentlichungsnummer: **0 241 686 B1**

(12) # EUROPÄISCHE PATENTSCHRIFT

(45) Veröffentlichungstag der Patentschrift: **06.02.91 Patentblatt 91/06**

(51) Int. Cl.$^5$: **C07F 9/38**

(21) Anmeldenummer: **87102848.6**

(22) Anmeldetag: **27.02.87**

(54) **Verfahren zur Herstellung von Alkali-phosphonoformiaten.**

(30) Priorität: **07.03.86 DE 3607445**

(43) Veröffentlichungstag der Anmeldung: **21.10.87 Patentblatt 87/43**

(45) Bekanntmachung des Hinweises auf die Patenterteilung: **06.02.91 Patentblatt 91/06**

(84) Benannte Vertragsstaaten: **AT BE CH DE ES FR GB IT LI NL SE**

(56) Entgegenhaltungen:
**DD-A- 219 198**
**DD-A- 243 500**
**DE-A- 2 435 407**
**CHEMICAL ABSTRACTS, Band 98, Nr.8, 1984,S.20, Z'fassung 46450y, Columbus, Ohio, US; I.O. NOREN et al.: "Synthesis of esters of phosphonoformic acid and their antiherpes activity" .**
**CHEMICAL ABSTRACTS, Band 101, Nr. 8, 1984, Seite 634, Z'fassung 55224k, Columbus, Ohio, US; K.HUANG et al.: "Synthesis of antiviral agents disodium phosphonacetate and trisodium phosphonoformate" .**

(73) Patentinhaber: **HOECHST AKTIENGESELLSCHAFT**
**Postfach 80 03 20**
**D-6230 Frankfurt am Main 80 (DE)**

(72) Erfinder: **Gerdau, Thomas, Dr.**
**Taunusstrasse 1a**
**D-6239 Eppstein/Taunus (DE)**

**EP 0 241 686 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Phosphonoameisensäure ist die Verbindung (1)

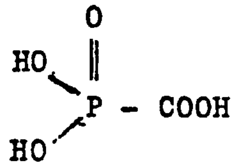

(1).

Sie spaltet sehr leicht $CO_2$ ab und ist daher – jedenfalls bei Normalbedingungen – kaum beständig ; durch die $CO_2$-Abspaltung bildet sich aus der Phosphonoameisensäure phosphorige Säure.

Verschiedene Derivate – hauptsächlich etliche Ester und Salze – der Phosphonoameisensäure sind als pflanzenwuchsregulierende (vgl. DE-A 2435407) und antiviral –z.B. gegen Herpesviren – wirksame Substanzen (vgl. z.B. DD-A-219198) bekannt.

Die Ester der Phosphonoameisensäure – wie der Triäthylester – können durch Arbusow-Reaktion von Estern der phosphorigen Säure mit Chlorameisensäureestern hergestellt werden (P. Nylen, Ber. d. dtsch. chem. Ges. 57 (1924), S. 1023-1038, insbesondere S. 1027 und 1035). Im Falle der Herstellung des Triäthylesters lautet die entsprechende Reaktionsgleichung wie folgt :

$$(C_2H_5O)_3P + ClCOOC_2H_5 \longrightarrow (C_2H_5O)_2\overset{O}{\overset{\|}{P}}COOC_2H_5 + C_2H_5Cl$$

Nach S. 1028 des vorerwähnten Artikels von P. Nylen wird der Phosphonoameisensäuretriäthylester beim Kochen mit Wasser oder Säuren quantitativ in phosphorige Säure und $CO_2$ (und wohl auch Äthanol) gespalten.

Bei der alkalischen Verseifung mit Natronlauge entsteht – nach den Seiten 1029 und 1036 dieses Artikels – das Trinatriumsalz der Phosphonoameisensäure.

Außer daß die Verseifung durch 3 bis 4-stündiges Kochen am Rückfluß durchgeführt wird bzw. wurde, wird eine genauere Vorschrift für die Durchführung der alkalischen Verseifung nicht gegeben ; auch entsprechende Ausbeuteangaben sind aus der Literaturstelle nicht ersichtlich.

Nach Beispiel 1 der DE-A-2435407 wurde jedoch "nach dem Verfahren von Nylen" (a.a.O.) durch 2-stündiges Erhitzen von Phosphonoameisensäuretriäthylester mit wäßriger Natronlauge am Rückfluß eine (sich aus den mitgeteilten Zahlenangaben errechnende) Ausbeute von nur 15,7% Trinatriumphosphonoformiat (als Hexahydrat) erhalten. Die niedrige Ausbeute ist offenbar dadurch bedingt, daß die Phosphonoameisensäuretriester leicht in Phosphit und $CO_2$ gespalten werden.

Auch S. Warren und M. R. Williams (J. Chem. Soc. (B), 1971, S. 618-621) erhielten bei der alkalischen Verseifung des Phosphonoameisensäuretriäthylesters mit wäßriger Natronlauge nur eine wenig höhere Ausbeute an dem entsprechenden Trinatrium-phosphonoformiat (19%). Die Verseifung wurde hier durch Zugabe der wäßrigen Natronlauge zu dem Phosphonoameisensäuretriäthylester durchgeführt, wobei nicht gekühlt wurde. Infolge der Verseifungswärme soll sich der Ansatz erhitzt haben ; das freigesetzte Äthanol soll dabei abdestilliert sein.

Über eine Ausbeute von immerhin 46% an Trinatrium-phosphonoformiat bei der alkalischen Verseifung von Phosphonoameisensäuretriäthylester mit wäßriger Natronlauge berichten Huang Kai und Wang Bijun in Yiyao Gongye 1984, (3), S. 5-7. Nach dem letzten Absatz auf Seite 6 wurden 34,7 g Phosphonoameisensäuretriäthylester mit 82,5 ml 40%iger Natronlauge unter Rühren versetzt und eine halbe Stunde erhitzt. Nach dem Abkühlen und Absaugen wurden 16 g Trinatrium-phosphonoformiat (als Hexahydrat) erhalten ; aus der Mutterlauge wurden weitere 6,8 g gewonnen.

Eine noch höhere Ausbeute an Trinatrium-phosphonoformiat –nämlich eine solche von 64% – soll in Beispiel 7 der eingangs erwähnten DD-A-219198 erhalten worden sein – allerdings nicht bei der alkalischen Verseifung des Phosphonoameisensäure-triäthylesters, sondern des Äthoxycarbonylphosphonsäure-bis-trimethylsilylesters

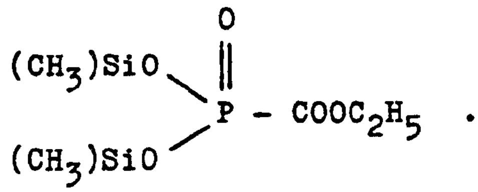

In dem genannten Beispiel wird sogar von einer 100%igen Ausbeute gesprochen ; aus den mitgeteilten Zahlenangaben errechnet sich jedoch eindeutig nur eine Ausbeute von 64%.

Die bekannten Verfahren zur Herstellung von Alkali-phosphonoformiaten durch alkalische Verseifung von Phosphonoameisensäureestern sind zwar einfach durchführbar und gehen auch von einfachen und gut zugänglichen Ausgangsprodukten aus, doch wird nur in einem einzigen Fall eine Ausbeute über 50% d.Th. erreicht. Dieser Fall, in dem eine höhere Ausbeute erzielt wird (DD-A-219198-64%), erfordert dafür den Einsatz der nicht ganz einfach zugänglichen Alkoxycarbonyl-phosphonsäurebistrimethylsilylester als Ausgangssubstanzen.

Es war daher wünschenswert und bestand die Aufgabe, die bekannten Verfahren zur Herstellung von Alkali-phosphonoformiaten zu verbessern bzw. ein neues, verbessertes und wirtschaftlicheres Verfahren bereitzustellen.

Diese Aufgabe konnte erfindungsgemäß durch eine zweistufige Verfahrensweise der alkalischen Verseifung von Phosphonoameisensäure-trialkylestern gelöst werden, wobei besonders darauf zu achten ist, daß die Temperatur am Anfang der Verseifungsreaktion –- in der ersten Verfahrensstufe – relativ niedrig bleibt.

Erfindungsgegenstand ist ein Verfahren zur Herstellung von Alkali-phosphonoformiaten durch alkalische Verseifung von Phosphonoameisensäure-trialkylestern mit einer wäßrigen Alkalihydroxidlösung, das dadurch gekennzeichnet ist, daß man

a) während des Zusammenbringens der Phosphonoameisensäuretrialkylester und der wäßrigen Alkalihydroxidlösung die Temperatur der Reaktionsmischung zwischen dem Gefrierpunkt des Wassers und etwa 40°C hält, vorzugsweise nicht über etwa 30°C steigen läßt, und gegebenenfalls noch einige Zeit in diesem Temperaturbereich hält, und daß man

b) danach die Reaktionsmischung bis zur vollständigen Verseifung auf Temperaturen bis zu etwa 100°C erhitzt.

Die alkalische Verseifung der Phosphonoameisensäureester ist eine exotherme Reaktion. Da der Hauptteil der Verseifung gleich nach dem Kontakt der Ester mit der Alkalihydroxidlösung abläuft, erwärmt sich die Reaktionsmischung beim nicht zu langsamen Zusammengeben der Reaktionspartner ziemlich schnell und intensiv. Um die Temperaturgrenzen der Stufe a) des erfindungsgemäßen Verfahrens nicht zu überschreiten, ist es daher normalerweise erforderlich, die Reaktionsmischung hier zu kühlen. Nach unten ist der Temperaturbereich der Stufe a) durch den Gefrierpunkt des Wassers begrenzt, so daß etwa 0°C als untere Temperaturgrenze angegeben werden kann ; ein günstiger Temperaturbereich liegt zwischen etwa 15 und 30°C.

Nach beendetem Zusammengeben der Reaktionspartner entsteht keine besondere Wärmetönung mehr, so daß die Kühlung dann gegebenenfalls wieder entfernt werden kann. Es ist zweckmäßig, die Reaktionsmischung dann noch einige Zeit innerhalb des Temperaturbereichs der Stufe a) zu halten, was durch Stehenlassen oder Rühren bei Raumtemperatur geschehen kann.

Zur Vervollständigung der Verseifung wird dann noch auf Temperaturen bis zu etwa 100°C, vorteilhaft auf Temperaturen zwischen etwa 80 und 100°C, erhitzt, was zweckmäßig unter Rückfluß und ggfs. unter intensiver Durchmischung, z. B. durch Rühren geschieht. Die Vervollständigung der Verseifung kann gegebenenfalls durch entsprechende Probeentnahme aus der Reaktionsmischung verfolgt werden. Normalerweise ist die Verseifung vollständig, wenn man jede der beiden Stufen a) und b) etwa 0,5 bis 2 Stunden lang ablaufen läßt.

Durch diese Verfahrensweise werden Ausbeuten an den gewünschten Alkali-phosphonoformiaten von meist über 80% d. Th. erhalten. Es ist außerordentlich überraschend, daß durch die erfindungsgemäße einfache Abänderung der bekannten Verseifungsverfahren (Niedrighalten der Temperatur am Anfang der Verseifung !) ein derart sprunghaft verbessertes Ergebnis zustande kommt.

Ausgangsverbindungen für das erfindungsgemäße Verfahren sind Phosphonoameisensäure-trialkylester der Formel

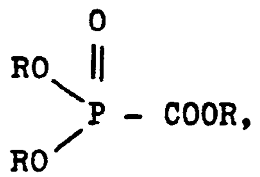

worin die Reste R unabhängig voneinander Alkylreste darstellen. Die Länge des Alkylrestes ist im Prinzip ohne Bedeutung. Bevorzugt sind $C_1$-$C_4$-Alkylreste, insbesondere $CH_3$ oder $C_2H_5$. Beispielhafte derartige Ester sind die Trimethyl-, Triäthyl-, die verschiedenen Tripropyl- und Tributylester, wie die Tri-n-propyl- und Tri-n-butylester sowie die Mischester

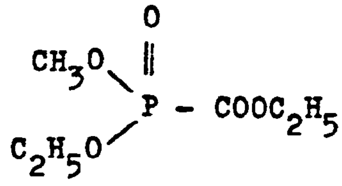

und

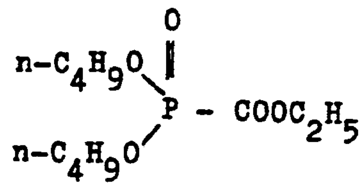

Die Verbindungen sind auf bekannte Weise erhältlich, z.B. durch Arbusow-Reaktion der entsprechenden Trialkylphosphite und Chlorameisensäurealkylester.

Als wäßrige Alkalihydroxidlösungen kommen im Prinzip die wäßrigen Lösungen sämtlicher Alkalihydroxide in Frage (LiOH, NaOH, KOH, RbOH, CsOH) ; bevorzugt sind die wäßrigen NaOH– und KOH–Lösungen.

Die Konzentration der wäßrigen Alkalihydroxidlösung kann in einem weiten Bereich liegen. Bevorzugt sind etwa 15 bis 50 (Gew.) %ige, insbesondere etwa 20 bis 30 (Gew.) %ige Lösungen.

Die der Verseifungsreaktion zugrundeliegende Reaktionsgleichung ist :

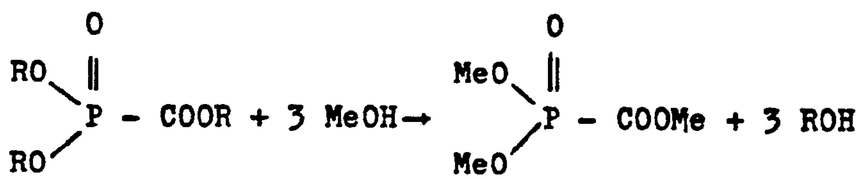

(R = Alkyl, Me = Alkalimetall)

Nach der Stöchiometrie dieser Reaktion sind für die Verseifung von einem Mol Phosphonoameisensäure-trialkylester 3 Mol Alkalihydroxid erforderlich. Dementsprechend werden die Reaktionspartner Phosphonoameisensäure-trialkylester und Alkalihydroxid auch im Molverhältnis von 1 : mindestens etwa 3 eingesetzt. Bevorzugt ist ein Verhältnis von 1 : etwa 5 bis 6.

Das Verfahren wird zweckmäßig so durchgeführt, daß man die wäßrige Alkalihydroxidlösung vorlegt und dazu unter Kühlung den Phosphonoameisensäure-trialkylester (gegebenenfalls unter Rühren) zutropft. Dabei ist darauf zu achten, daß die Temperatur der Reaktionsmischung die für die Reaktionsstufe a) angegebene Obergrenze (etwa 40°C, vorzugsweise nur etwa 30°C) nicht übersteigt. Nach beendeter Zugabe des Phosphonoameisensäure-trialkylesters kann die Kühlung normalerweise weggenommen werden, ohne daß die Temperatur wesentlich ansteigt. Ein etwa 0,5 bis 1-stündiges Nachrühren bei Raumtemperatur ist vorteilhaft. Das Nachrühren ist Bestandteil der Verfahrensstufe a).

Natürlich ist es im Prinzip auch möglich, etwa den Phosphonoameisensäure-trialkylester vorzulegen und die wäßrige Alkalihydroxidlösung zuzudosieren oder auch den Phosphonoameisensäure-trialkylester und die wäßrige Alkalihydroxidlösung gleichzeitig in ein entsprechendes Reaktionsgefäß einzudosieren, solange nur die erfindungsgemäßen Temperaturbedingungen eingehalten werden. Nach beendeter Reaktion läßt man den Ansatz abkühlen und auskristallisieren und arbeitet auf übliche Weise auf.

In einer bevorzugten Ausführungsform des Verfahrens setzt man den jeweiligen Ausgangs-Phosphonoameisensäure-trialkylester in Form des rohen Reaktionsgemisches der Arbusow-Reaktion von Trialkylphosphit und Chlorameisensäurealkylester direkt für die alkalische Verseifung ein.

Die nach dem erfindungsgemäßen Verfahren in hoher Ausbeute und Reinheit erhaltenen Alkali-phosphonoformiate können gewünschtenfalls auf übliche Weise in andere Salze der Phosphonoameisensäure

– z.B. die Ammonium- und Alkylammonium-, Erdalkali-, Zn- und/oder Mn-Salze – überführt werden ; dies kann z.B. durch Hindurchleiten einer wäßrigen Lösung der Alkali-phosphonoformiate durch eine mit den entsprechenden anderen Kationen beladenen Ionenaustauschersäule geschehen.

Die folgenden Beispiele sollen der näheren Erläuterung der Erfindung dienen.

Beispiel 1 : Trinatrium-phosphonoformiat-Hexahydrat

a) 120 g (3 Mol) Natriumhydroxid wurden in 350 ml Wasser gelöst und 105 g (0,5 Mol) Phosphonoameisensäuretriäthylester innerhalb von 30 Minuten eingetropft. Durch Kühlung mit einem Eisbad wurde die Innentemperatur auf 20-25°C gehalten. Nach beendeter Zugabe wurde das Eisbad entfernt und das Reaktionsgemisch 1 h bei Raumtemperatur gerührt.

b) Anschließend wurde 1 h unter Rückfluß gekocht und zur Vervollständigung der Kristallisation 24 h bei 0°C aufbewahrt. Nach dem Absaugen des Kristallisats und Trocknen im Vakuumexsikkator erhielt man 125,5 g eines 99,5% reinen Produktes ($^{31}P$-NMR), was einer Ausbeute von 84% d. Th. entspricht. Nach Umkristallisation aus 400 ml Wasser wurden 122,0 g in Form wohlausgeprägter Kristalle zurückgewonnen, die 99,9% rein waren.

$Na_3CO_5P \cdot 6H_2O$ MG 300,04 $^{31}P$-NMR 0,8 ppm.

Beispiel 2 : Trinatrium-phosphonoformiat-Hexahydrat und -Pentahydrat

83,1 g (0,5 Mol) Triäthylphosphit wurden auf 60°C erwärmt, 56,7 g (0,6 Mol) Chlorameisensäuremethylester innerhalb von 1 h zugetropft und nach beendeter Zugabe 15 Minuten auf 100°C erwärmt. Die in einer Kühlfalle aufgefangene Menge Äthylchlorid betrug 33,2 g.

a) Die Reaktionslösung wurde dann innerhalb von 45 Minuten zu einer mit Eis gekühlten Lösung von 100 g (2,5 Mol) Natriumhydroxid in 300 ml Wasser getropft, wobei die Innentemperatur nicht über 25°C anstieg. Nach beendeter Zugabe wurde 1 h bei Raumtemperatur gerührt und

b) anschließend 1 h unter Rückfluß gekocht. Nach vollständiger Auskristallisation erhielt man 121 g Trinatriumphosphonoformiat-Hexahydrat, das 99% rein war ($^{31}P$-NMR). Das entspricht einer Ausbeute von 80% d. Th.

Nach vierstündigem Aufbewahren in einem Trockenschrank (50°C, 200 mbar) wurden 113,7 g des entsprechenden Pentahydrats erhalten.

$Na_3CO_5P \cdot 5H_2O$ Ber. Na 24,4% C 4,3% H 3,6% P 11,0%

MG 282,01 ; Gef. Na 24,5% C 4,6% H 3,5% P 11,2%

Beispiel 3 : Trikalium-phosphonoformiat

a) 52,5 g (0,25 Mol) Phosphonoameisensäuretriäthylester wurden innerhalb von 30 Minuten zu einer Lösung von 84,2 g (1,5 Mol) Kaliumhydroxid in 175 ml Wasser getropft und durch Kühlen mit einem Eisbad ein Ansteigen der Innentemperatur über 25°C verhindert. Anschließend wurde 30 Minuten bei Raumtemperatur gerührt und

b) 1 h unter Rückfluß gekocht. Die Reaktionslösung wurde zur Trockne eingedampft und aus dem Rückstand, der etwa 5% Kaliumphosphit enthielt, 51,7 g Trikalium-phosphonoformiat durch Umkristallisation erhalten. Das entspricht einer Ausbeute von 86% d. Th.

$K_3CO_5P$ MG 240,29; Ber. K 48,8% C 5,0% P 12,9%
Gef. K 49,5% C 5,4% P 12.5%

## Ansprüche

1. Verfahren zur Herstellung von Alkali-phosphonoformiaten durch alkalische Verseifung von Phosphonoameisensäuretrialkylestern mit einer wäßrigen Alkalihydroxidlösung, dadurch gekennzeichnet, daß man

a) während des Zusammenbringens der Phosphonoameisensäuretrialkylester und der wäßrige Alkalihydroxidlösung die Temperatur der Reaktionsmischung zwischen dem Gefrierpunkt des Wassers und etwa 40°C und gegebenenfalls noch einige Zeit in diesem Temperaturbereich hält, und daß man

b) danach die Reaktionsmischung bis zur vollständigen Verseifung auf Temperaturen bis zu etwa 100°C erhitzt.

2. Verfahren nach Anspruch 1, dadurch gekennzeichnet, daß man jede der beiden Stufen a) und b) etwa 0,5 bis 2 Stunden lang ablaufen läßt.

3. Verfahren nach Anspruch 1 oder 2, dadurch gekennzeichnet, daß man die Phosphonoameisensäuretrialkylester in Form des rohen Reaktionsprodukts der Arbusow-Reaktion zwischen Trialkylphosphit und Chlorameisensäurealkylester einsetzt.

4. Verfahren nach einem oder mehreren der Ansprüche 1 bis 3, dadurch gekennzeichnet, daß man bei der Stufe a) zwischen etwa 15 und 30°C arbeitet.

5. Verfahren nach einem oder mehreren der Ansprüche 1 bis 4, dadurch gekennzeichnet, daß man in der Stufe b) auf etwa 80 bis 100°C erhitzt.

6. Verfahren nach einem oder mehreren der Ansprüche 1 bis 5, dadurch gekennzeichnet, daß die Alkylgruppe im Phosphonoameisensäuretrialkylester jeweils 1 bis 4 Kohlenstoffatome aufweist.

7. Verfahren nach Anspruch 6, dadurch gekennzeichnet, daß die Alkylgruppe Methyl oder Äthyl ist.

## Claims

1. A process for the preparation of alkali metal phosphonoformates by alkaline saponification of trialkyl phosphonoformate using an aqueous alkali metal hydroxide solution, which comprises

a) keeping the temperature of the reaction mixture between the freezing point of water and about 40°C and, if appropriate, keeping it in this temperature range for some time, during the mixing of the trialkyl phosphonoformate and the aqueous alkali metal hydroxide solution, and which comprises

b) subsequently heating the reaction mixture at temperatures up to about 100°C until the saponification is complete.

2. The process as claimed in claim 1, wherein both of the two stages a) and b) are allowed to proceed for about 0.5 to 2 hours.

3. The process as claimed in claim 1 or 2, wherein the trialkyl phosphonoformates are employed in the form of the crude reaction product of the Arbusow reaction between trialkyl phosphite and alkyl chloroformate.

4. The process as claimed in one or more of claims 1 to 3, wherein stage a) is carried out at between about 15 and 30°C.

5. The process as claimed in one or more of claims 1 to 4, wherein stage b) involves heating to about 80 to 100°C.

6. The process as claimed in one or more of claims 1 to 5, wherein each of the alkyl groups in the trialkyl phosphonoformate has 1 to 4 carbon atoms.

7. The process as claimed in claim 6, wherein the alkyl group is methyl or ethyl.

## Revendications

1. Procédé pour préparer des phosphonoformiates de métaux alcalins par saponification alcaline de phosphonoformiates de trialkyles au moyen d'une solution aqueuse d'un hydroxyde de métal alcalin, procédé caractérisé en ce que :

a) au cours de la mise en contact du phosphonoformiate de trialkyle et de la solution aqueuse d'hydroxyde de métal alcalin on maintient le mélange réactionnel à une température comprise entre le point de congélation de l'eau et environ 40°C, et éventuellement on le maintient pendant encore quelque temps dans cet intervalle de température, puis

b) on chauffe le mélange réactionnel à une température d'au plus environ 100°C jusqu'à ce que la saponification soit totale.

2. Procédé selon la revendication 1, caractérisé en ce qu'on effectue chacune des deux étapes (a) et (b) pendant une durée d'environ 0,5 à 2 heures.

3. Procédé selon l'une des revendications 1 et 2, caractérisé en ce que le phosphonoformiate de trialkyle est mis en jeu sous la forme du produit brut provenant de la réaction d'Arbusow entre le phosphite de trialkyle et le chloroformiate d'alkyle.

4. Procédé selon l'une quelconque des revendications 1 à 3, caractérisé en ce qu'on opère, dans l'étape (a), à une température comprise entre environ 15 et 30°C.

5. Procédé selon l'une quelconque des revendications 1 à 4, caractérisé en ce que, dans l'étape (b), on chauffe à une température d'environ 80 à 100°C.

6. Procédé selon l'une quelconque des revendications 1 à 5, caractérisé en ce que les radicaux alkyles, dans le phosphonoformiate de trialkyle, contiennent chacun de 1 à 4 atomes de carbone.

7. Procédé selon la revendication 6, caractérisé en ce que le radical alkyle est un radical méthyle ou éthyle.